# EUROPÄISCHE PATENTANMELDUNG

(11) **EP 2 423 012 A2**
(43) Veröffentlichungstag der Anmeldung: **29.02.2012**
(21) Anmeldenummer: 11175281.2
(22) Anmeldetag: 26.07.2011
(51) Int. Cl.: B60G 21/055, B29C 70/00

(54) **Faserverbundwerkstoffstabilisator**

(30) Priorität: 25.08.2010 DE 102010035524
(71) Anmelder: Benteler Automobiltechnik GmbH, 33102 Paderborn (DE)
(72) Erfinder: Hammelmeier, Ullrich, 33100 Paderborn (DE); Drabon, Rodscha, 33154 Salzkotten (DE); Howe, Christian, 33104 Paderborn (DE); Saggel, Sebastian, 33098 Paderborn (DE); Böke, Johannes, 32825 Blomberg (DE)
(74) Vertreter: Ksoll, Peter

(57) **Zusammenfassung**

Die vorliegende Erfindung betrifft einen Stabilisator (1) zur Anordnung an einer Kraftfahrzeugachse, aufweisend einen Stabilisatorrücken (2) und zwei Schenkel (3). Der Stabilisator (1) ist erfindungsgemäß als Hybridbauteil hergestellt, wobei mindestens eine Stabilisatorkomponente aus einem Verbundwerkstoff, vorzugsweise einem Faserverbundwerkstoff hergestellt ist.

## Beschreibung

Die vorliegende Erfindung betrifft einen Stabilisator zur Anordnung an einer Kraftfahrzeugachse gemäß den Merkmalen im Oberbegriff des Patentanspruches 1.

Stabilisatoren im Kraftfahrzeugbereich sind Torsionsfedern und dienen zur Wankstabilisierung des Aufbaus von Kraftfahrzeugen. Sie werden hierzu zwischen den Rädern an einer Achse eines Kraftfahrzeuges angeordnet. Bei wechselseitiger Einfederung der Räder einer Achse verteilen Stabilisatoren die Achslast und sorgen damit für eine gleichmäßige Achslastverteilung. Hierdurch wird das Fahrverhalten eines Kraftfahrzeuges positiv derart beeinflusst, dass die Haftbeiwerte der an einer Achse angeordneten Räder immer nahezu identisch auf einem guten Niveau gehalten werden.

Aus dem Stand der Technik sind beispielsweise aus der DE 197 58 292 C2 gebaute Stabilisatoren bekannt. Hier werden Stabilisatorabschnitte unterschiedlicher Wandstärke mit unterschiedlichem Durchmesser und unterschiedlicher Festigkeit zu einem Stabilisator zusammengebaut. Hierdurch ist es möglich, den Stabilisator mit seinen jeweiligen Torsions- und Steifigkeitsanforderungen gut an das jeweilige gewünschte Fahrverhalten bzw. Torsionsverhalten des Stabilisators anzupassen. Bei diesen Stabilisatoren handelt es sich um passive Stabilisatoren.

Aus der DE 199 30 444 C2 sind auch beispielsweise aktive Stabilisatoren bekannt. Aktive Stabilisatoren weisen ein zusätzliches aktives Stellelement auf, mit dem es weiterhin möglich ist, das Torsionsverhalten des Stabilisators nicht nur über die jeweiligen Radlasten und das sich dann einstellende Torsionsverhalten zu steuern, sondern durch Verstellung des aktiven Stellelementes zusätzlich aktiv zu beeinflussen.

Die aus dem Stand der Technik bekannten Stabilisatoren werden als Vollstäbe oder aber als Rohrstäbe aus metallischen Werkstoffen gefertigt. Vorzugsweise kommt hier Stahl zum Einsatz. Abhängig von der notwendigen Federrate werden die Bauteile unter Berücksichtigung der Lebensdauer und der Steifigkeitsanforderungen ausgelegt. Ist eine hohe Steifigkeit erforderlich, so ist diese durch den Einsatz von metallischen Werkstoffen automatisch mit einem hohen Bauteilgewicht verbunden. Ein hohes Bauteilgewicht steht jedoch den aktuellen Anforderungen an Kraftfahrzeuge entgegen, da das Gesamtgewicht eines Kraftfahrzeuges verringert werden soll, um den Kraftstoffverbrauch und den CO₂ Ausstoß ebenfalls zu minimieren.

Wird ein Stabilisator mit den bisher aus dem Stand der Technik bekannten Verfahren hergestellt, so ergibt sich bei einer Berücksichtigung eines durchaus geringen Gewichts entweder eine geringe Lebensdauer oder aber eine Nichterreichung der geforderten Steifigkeitsanforderung.

Aufgabe der vorliegenden Erfindung ist es daher, einen Stabilisator für ein Kraftfahrzeug bereitzustellen, der ein geringes Bauteilgewicht bei gleichzeitiger Möglichkeit der Erfüllung hoher Steifigkeitsanforderungen vereint.

Die zuvor genannte Aufgabe wird mit einem Stabilisator zur Anordnung an einer Kraftfahrzeugachse mit den Merkmalen im Patentanspruch 1 gelöst.

Vorteilhafte Ausführungsvarianten der vorliegenden Erfindung sind Bestandteil der abhängigen Patentansprüche.

Der erfindungsgemäße Stabilisator zur Anordnung an einer Kraftfahrzeugachse weist einen Stabilisatorrücken und zwei Schenkel auf. Er ist im Wesentlichen U-förmig konfiguriert, kann aber auch C-förmig oder anderweitig konfiguriert sein. Erfindungsgemäß ist der Stabilisatorrücken aus Verbundwerkstoff ausgebildet. Dies bietet die Möglichkeit, durch den Verbundwerkstoff gezielt das Torsionsverhalten und damit die Steifigkeitsanforderungen bei gleichzeitigem, geringem, spezifischen Bauteilgewicht zu erfüllen. Das Flächenträgheitsmoment und somit das Steifigkeitsverhalten, insbesondere des Stabilisatorrückens, kann durch die gezielte Wahl von Verbundwerkstoff und auch die gezielte Herstellungsmethode des Verbundwerkstoffes so optimal auf die jeweiligen Anforderungen ausgelegt werden. Beispielsweise bei einem Sportwagen ist es somit möglich, eine besonders hohe Steifigkeit, die nur ein geringes Wanken des Aufbaus zulässt, mit gleichzeitig sehr geringem spezifischen Gewicht, gegenüber einem konventionell ausgebildeten Stabilisator aus metallischem Material herzustellen.

In einer weiteren vorteilhaften Ausführungsvariante sind die Schenkel des Stabilisators aus Verbundwerkstoff ausgebildet. Hierbei kann es gerade im Bereich des Einsatzes von Faserverbundwerkstoffen zu einer optimalen Auslegung der einzelnen Wirkanforderungen und die damit verbundenen Steifigkeitsanforderungen kommen. Beispielsweise können somit im Rahmen der Erfindung am Stabilisatorrücken die Fasern eines Faserwerkstoffes derart orientiert sein, dass ein besonders hohes Widerstandsmoment gegen Torsion erreicht wird. Gleichzeitig können an den Schenkeln durch andere Orientierung der Fasern eines Faserverbundwerkstoffes ein besonders hohes Widerstandsmoment gegen Biegung erreicht werden.

In der Folge stellt sich ein optimal anpassbarer Stabilisator mit gleichzeitig geringem Bauteilgewicht ein, der die fahrdynamischen Werte eines Kraftfahrzeuges erhöhen kann und gleichzeitig durch das geringere Gewicht den Kraftstoffverbrauch und den CO₂ Ausstoß minimiert. Ebenfalls ergibt sich durch das geringe Gewicht insbesondere der Vorteil, dass der Anteil der ungefederten Radmassen sinkt und somit die gesamte Agilität des Kraftfahrzeuges sich im Wesentlichen verbessert.

Ebenfalls ergibt sich durch den Verbundwerkstoff die Möglichkeit der Formung eines Stabilisators mit besonders komplexen, geometrischen Abmaßen oder aber Formen. Gerade im Unterflurbereich eines Kraftfahrzeuges werden hier insbesondere hohe Anforderungen an die Möglichkeiten der Bauteilkonfiguration eines Kraftfahrzeugstabilisators gestellt, Beispielsweise wird durch Federbeine, Antriebswellen, Querlenker, Bremsen, Bremsleitungen etc. nur ein geringer Bauraum für die Anordnung eines Stabilisators zur Verfügung gestellt. Insbesondere mit dem Verbundwerkstoff ist es hier möglich, einen Stabilisator derart zu gestalten, dass er in einem Anbindungsbereich des Schenkels zusätzlich eine Schlangenform oder ähnliches aufweist.

In einer weiteren vorteilhaften Ausführungsvariante der vorliegenden Erfindung sind die Schenkel des Stabilisators aus metallischem Werkstoff ausgebildet. Hierbei können durch die Anordnung von Verbundwerkstoff am Stabilisatorrücken beispielsweise die Schenkel aus einem Aluminiumwerkstoff oder aber auch aus Stahlwerkstoffen oder ähnlichen Legierungen bestehen. Auch hier ist wiederum durch die Herstellung des Stabilisators als Hybridbauteil der Vorteil gegeben, insbesondere bei der Werkstoffauswahl der einzelnen Funktionsabschnitte eines Stabilisators mehr Freiheitsgrade zu erreichen. Eine Entkopplung der einzelnen Funktionsabschnitte wird somit sichergestellt, wodurch wiederum die jeweiligen Funktionsabschnitte optimal unter Steifigkeitsaspekten, Torsionsverhalten und Bauteilgewichtsaspekten ausgelegt werden können.

In einer bevorzugten Ausführungsvariante der vorliegenden Erfindung wird als Verbundwerkstoff ein Faserverbundwerkstoff eingesetzt, vorzugsweise besteht dieser aus Glasfasern, Carbonfasern, Basaltfasern oder aber auch metallischen Fasern. Der Faserverbundwerkstoff zeichnet sich dadurch aus, dass er zusätzlich mindestens ein Harz oder aber ein Klebstoff beinhaltet, der dann mit dem Faserwerkstoff einen Verbund eingeht. Hierdurch ergeben sich insbesondere die Vorteile, dass zum einen durch die Orientierung der Faserlagen und auch der Fasern, gezielt auf die jeweiligen Steifigkeitsanforderungen eingegangen werden kann. Weiterhin kann das Material durch Wahl des Harzes oder aber auch der Gewebelagen, beispielsweise durch Anordnung der Schuss- und Kettfäden, gezielt elastisch verformbar sein oder aber in seiner Steifigkeit erhöht werden. Ebenfalls ergeben sich insbesondere Vorteile in der komplexen Ausgestaltung eines Stabilisators sowie in der Variierung einer Wandstärke. Gerade unter Einsatz von neuartigen Wicklungstechnologien im Bereich des Faserverbundwerkstoffes ist es hiermit besonders kostengünstig möglich, die einzelnen Stabilisatorkomponenten herzustellen.

Besonders vorteilig im Rahmen der Erfindung ist es, dass der Stabilisatorrücken oder aber die Schenkel ausschließlich aus Faserverbundwerkstoff ausgebildet sind. Hierbei ergeben sich die Stabilisatorteile jeweils als angepasste Bauteile aus einem Werkstoff.

Im Rahmen der Erfindung ist es auch möglich, dass der Stabilisatorrücken oder aber die Schenkel aus einem Metallwerkstoff ausgebildet sind, der mit Faserverbundwerkstoff umwickelt ist. Hierdurch ergibt sich insbesondere die Möglichkeit, dass bereits bestehende Stabilisatoren in ihrem Steifigkeitsverhalten zunächst abschnittsweise gesteigert werden können, in dem sie mit Faserverbundwerkstoff verstärkt werden. Die so hergestellten Hybridbauteile ermöglichen auch den Einsatz neuer Werkstoffe, die bis dahin nicht für den Bau von Stabilisatoren geeignet waren. Beispielsweise ist es somit möglich, aus bestimmten Leichtmetallwerkstoffen Stabilisatorabschnitte zu fertigen und mit Faserverbundwerkstoff derart zu verstärken, dass sie plastische bzw. elastische Deformationen mit den gewünschten Eigenschaften besitzen. In der Folge stellen sich neue Möglichkeiten zur besseren Schaffung von Trägheitsmomenten, Widerstandsmomenten und damit Fahreigenschaften ein, bei gleichzeitig sinkendem Bauteilgewicht.

In einer weiteren bevorzugten Ausführungsvariante der vorliegenden Erfindung ist der Stabilisatorrücken mit den Schenkeln an Koppelstellen mit dem Faserverbundwerkstoff formschlüssig und/oder kraftschlüssig und/oder stoffschlüssig gekoppelt. Hierdurch ergibt sich die Möglichkeit, dass im Rahmen der Erfindung insbesondere verschiedene Werkstoffe derart miteinander gekoppelt werden können, dass die jeweiligen Steifigkeitsanforderungen und auch Anforderungen an die Koppelstellen, bezüglich der zu übertragenen Kräfte und Dauerhaltbarkeit, durch den Einsatz von Faserverbundwerkstoff und dem darin enthaltenen Harz erfüllt werden können. Im Rahmen der Erfindung ist es somit möglich, durch beispielsweise ein Aufschrumpfen eine kraftschlüssige bzw. reibschlüssige Verbindung von dem Stabilisatorrücken mit einem Schenkel herzustellen.

Weiterhin ist es möglich, durch das Einbringen beispielsweise einer Passfeder eine formschlüssige Verbindung herzustellen oder aber durch ein Aufkleben des Stabilisatorrückens an die Schenkel oder umgekehrt, eine stoffschlüssige Verbindung herzustellen. Hierzu kann der Schenkel mit dem Faserwerkstoff in der Koppelstelle zumindest abschnittsweise beispielsweise umwickelt werden. Dadurch ist es zum einen unter produktionstechnischen Aspekten besonders kostengünstig möglich, ein Hybridbauteil in Form eines Stabilisators herzustellen oder aber bei gleichzeitiger Produktion durch die Umwicklung und die anschließende Aushärtung des Faserverbundwerkstoffes, eine Verbindung besonders hoher Festigkeit und Dauerhaltbarkeit herzustellen.

Im Rahmen der Erfindung ist es auch möglich, die Schenkel mit dem Faserwerkstoff zumindest abschnittsweise zu verkleben. Für die Verklebung kann beispielsweise das Harz des Faserverbundwerkstoffes oder aber ein separater Klebstoff verwendet werden. Hier bieten sich wiederum insbesondere Vorteile aufgrund der Mannigfaltigkeit der auswählbaren und einzusetzenden Werkstoffe für den Bau eines Stabilisators, der zumindest abschnittsweise aus verschiedenen Bauteilen besteht.

Für die formschlüssige Koppelung können insbesondere Formschlusselemente, besonders bevorzugt Nietbolzen, zwischen den Faserwerkstoff und dem Schenkel angeordnet sein. Hierdurch ist es beispielsweise wiederum möglich, die einzelnen Komponenten separat herzustellen und dann durch Zusammenstecken des Schenkels mit dem Stabilisatorrücken durch Einbringen von Nietbolzen diesen formschlüssig zu koppeln. Im Rahmen der Erfindung ist es auch möglich, die Formschlusselemente bereits vorher beispielsweise in die Schenkel einzubringen und dann wiederum mit Faserverbundwerkstoff zur Herstellung des Stabilisatorrückens zu umwickeln. Hierdurch wird eine kombinierte formschlüssige und stoffschlüssige Verbindung hergestellt. Im Falle einer Wärmenachbehandlung oder ähnlichem, ist es durch Schrumpfung des Faserverbundwerkstoffes zusätzlich möglich, eine kraftschlüssige Verbindung herzustellen.

Im Rahmen der Erfindung ist auch möglich, dass der Stabilisator ein aktives Stellelement aufweist, wobei der Stabilisatorrücken zur Anbindung an das Stellelement vorzugsweise zweiteilig ausgebildet ist. Zur Anbindung des Stellelementes und der damit verbundenen Vorteile zur Erreichung der Fahreigenschaften des Kraftfahrzeuges ist es besonders vorteilig, wenn der Stabilisatorrücken in etwa auf der Hälfte geteilt ist. Dies ist jedoch nicht zwingende Voraussetzung, eine Teilung von 90/10, 70/30, 60/40 oder ähnliches ist auch möglich und wird jeweils durch den zur Verfügung stehenden Bauraum des geplanten Kraftfahrzeuges bestimmt.

Unter montagetechnischen Aspekten und auch wartungstechnischen Aspekten ist es besonders sinnvoll, dass zur Anbindung des Stabilisatorrückens bzw. der Stabilisatorrückenhälften an das aktive Stellelement Anschlussflansche vorgesehen sind. Mittels dieser Anschlussflansche können dann die einzelnen Stabilisatorteile an das Stellelement, beispielsweise durch Anschrauben gekoppelt werden.

Hierzu sind die Anschlussflansche insbesondere mit dem Stabilisatorrücken aus dem Faserverbundwerkstoff einstückig herstellbar. In diesem Falle wäre der Anschlussflansch ebenfalls aus Faserverbundwerkstoff hergestellt und über beispielsweise Bolzen an das aktive Stellelement zu koppeln bzw. gekoppelt.

Im Rahmen der Erfindung ist es auch möglich, dass die Anschlussflansche aus metallischem Werkstoff ausgebildet sind, beispielsweise aus Stahlwerkstoff oder aber aus einem Leichtmetallwerkstoff. Die Anschlussflansche sind dann mit dem Stabilisatorrücken bzw. den Stabilisatorrückenhälften formschlüssig und/oder kraftschlüssig und/oder stoffschlüssig gekoppelt. Die Vorteile ergeben sich analog der Koppelung des Stabilisatorrückens mit den Schenkeln.

Weitere Vorteile, Merkmale, Eigenschaften und Aspekte der vorliegenden Erfindung ergeben sich aus der folgenden Beschreibung. Diese dient dem einfachen Verständnis der Erfindung. Es zeigen:
- Figur 1: einen erfindungsgemäßen Kraftfahrzeugstabilisator,
- Figur 2: einen erfindungsgemäßen Kraftfahrzeugstabilisator mit aktivem Stellelement und
- Figur 3: einen Ausschnitt aus einer Faserwicklung eines Faserwerkstoffes.

In den Figuren werden für gleiche oder ähnliche Bauteile dieselben Bezugszeichen verwendet, auch wenn eine wiederholte Beschreibung aus Vereinfachungsgründen entfällt.

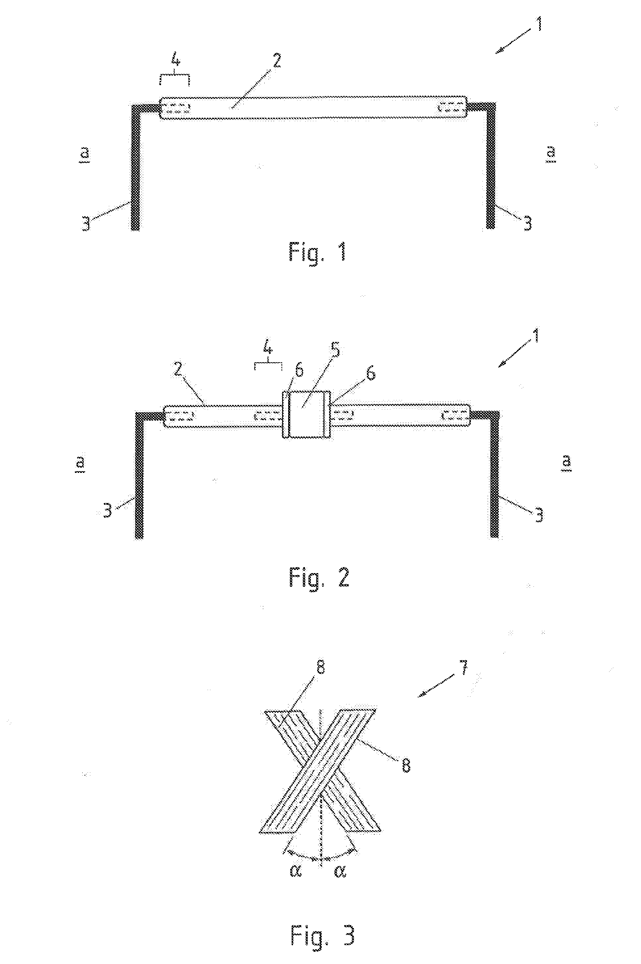

Figur 1 zeigt einen erfindungsgemäßen Stabilisator 1 zur Anordnung an einer hier nicht näher gezeigten Kraftfahrzeugachse, wobei der Stabilisator 1 aus einem Stabilisatorrücken 2 und zwei außenseitig a an dem Stabilisatorrücken 2 gekoppelten Schenkeln 3 besteht. Die Schenkel 3 sind dabei von dem Stabilisatorrücken 2 in Koppelstellen 4 umfasst. In den Koppelstellen 4 ist im Rahmen der Erfindung wahlweise eine kraftschlüssige, stoffschlüssige und/oder formschlüssige Verbindung ausgebildet.

Figur 2 zeigt den erfindungsgemäßen Kraftfahrzeugstabilisator, wobei zusätzlich in dem Kraftfahrzeugstabilisator ein aktives Stellelement 5 angeordnet ist. Das aktive Stellelement 5 sitzt etwa mittig zwischen dem Stabilisatorrücken 2. Es ergibt sich folglich ein zweigeteilter Stabilisatorrücken 2, der wiederum außenseitig a Schenkel 3 aufweist. Zur Anbindung des Stabilisatorrückens 2 an das aktive Stellelement 5 sind an dem Stabilisatorrücken 2 Anschlussflansche 6 vorgesehen. Die Anschlussflansche 6 selbst sind mit dem Stabilisatorrücken 2 analog den Schenkeln 3 in Koppelstellen 4 gekoppelt.

Figur 3 zeigt einen schematischen Ausschnitt 7 aus einer Faserwerkstoffbahn. Durch Beeinflussung der Winkel α und die damit verbundene Orientierung der einzelnen Fasern 8, ergibt sich eine Beeinflussung des jeweiligen Widerstandmoments des damit hergestellten Faserverbundwerkstoffbauteils.

### Bezugszeichen:

- 1 -: Stabilisator
- 2 -: Stabilisatorrücken
- 3 -: Schenkel
- 4 -: Koppelstellen
- 5 -: Stellelement
- 6 -: Anschlussflansch
- 7 -: Ausschnitt
- 8 -: Faser
- α -: Winkel
- a -: Außenseitig

## Patentansprüche

1. Stabilisator (1) zur Anordnung an einer Kraftfahrzeugachse, aufweisend einen Stabilisatorrücken (2) und zwei Schenkel (3), **dadurch gekennzeichnet, dass** der Stabilisatorrücken (2) aus Verbundwerkstoff ausgebildet ist.

2. Stabilisator nach Anspruch 1, **dadurch gekennzeichnet, dass** die Schenkel (3) aus Verbundwerkstoff ausgebildet sind.

3. Stabilisator nach Anspruch 1, **dadurch gekennzeichnet, dass** die Schenkel (3) aus metallischem Werkstoff ausgebildet sind.

4. Stabilisator nach einem der Ansprüche 1 bis 3, **dadurch gekennzeichnet, dass** als Verbundwerkstoff ein Faserverbundwerkstoff eingesetzt ist, vorzugsweise aus Glasfasern, Carbonfasern, Basaltfasern oder auch metallischen Fasern.

5. Stabilisator nach Anspruch 4, **dadurch gekennzeichnet, dass** der Stabilisatorrücken (2) ausschließlich aus Faserverbundwerkstoff ausgebildet ist.

6. Stabilisator nach Anspruch 4, **dadurch gekennzeichnet, dass** der Stabilisatorrücken (2) aus einem Metallwerkstoff ausgebildet ist, der mit Faserverbundwerkstoff umwickelt ist.

7. Stabilisator nach einem der Ansprüche 4 bis 6, **dadurch gekennzeichnet, dass** an Koppelstellen (4) zwischen Stabilisatorrücken (2) und Schenkel (3) mit dem Faserverbundwerkstoff formschlüssig und/oder kraftschlüssig und/oder stoffschlüssig gekoppelt ist.

8. Stabilisator nach einem der Ansprüche 4 bis 7, **dadurch gekennzeichnet, dass** der Schenkel (3) mit dem Faserverbundwerkstoff in der Koppelstelle (4) zumindest abschnittsweise umwickelt ist.

9. Stabilisator nach einem der Ansprüche 4 bis 8, **dadurch gekennzeichnet, dass** der Schenkel (3) mit dem Faserverbundwerkstoff zumindest abschnittsweise verklebt ist.

10. Stabilisator nach einem der Ansprüche 4 bis 9, **dadurch gekennzeichnet, dass** Formschlusselemente, insbesondere Nietbolzen, zwischen dem Faserverbundwerkstoff und dem Schenkel (3) angeordnet sind.

11. Stabilisator nach einem der Ansprüche 1 bis 10, **dadurch gekennzeichnet, dass** der Stabilisator (1) ein aktives Stellelement (5) aufweist, wobei der Stabilisatorrücken (2) zur Anbindung an das Stellelement (5) zweiteilig ausgebildet ist.

12. Stabilisator nach Anspruch 11, **dadurch gekennzeichnet, dass** zur Anbindung des Stabilisatorrückens (2) an das Stellelement (5) Anschlussflansche (6) vorgesehen sind.

13. Stabilisator nach Anspruch 12, **dadurch gekennzeichnet, dass** die Anschlussflansche (6) mit dem Stabilisatorrücken (2) einstückig aus Faserverbundwerkstoff hergestellt sind.

14. Stabilisator nach einem der Ansprüche 12 oder 13, **dadurch gekennzeichnet, dass** die Anschlussflansche (6) aus metallischem Werkstoff ausgebildet sind, wobei die Anschlussflansche (6) mit dem Stabilisatorrücken (2) formschlüssig und/oder kraftschlüssig und/oder stoffschlüssig gekoppelt sind.
